# EUROPEAN PATENT SPECIFICATION

(11) **EP 0 654 595 B1**
(45) Date of publication and mention of the grant of the patent: **15.09.1999**
(21) Application number: 94117744.6
(22) Date of filing: 10.11.1994
(51) Int. Cl.: F02F 3/00, F16J 1/16

(54) **Piston for alternating volumetric engines**
Hubkolben für hin- und hergehende volumetrische Motoren
Piston pour moteur volumétrique à mouvement alternatif

(30) Priority: 24.11.1993 IT MI932483
(43) Date of publication of application: 24.05.1995
(73) Proprietor: R.A.M. di DELL'ORO ADRIANA Ricerca Accessori Motori, I-22040 Ello (CO) (IT)
(72) Inventor: Dell'oro, Adriana, I-22040 Ello (CO) (IT)
(74) Representative: Marietti, Giuseppe

(56) References cited:
- DE-A- 3 538 426
- DE-A- 3 602 576
- GB-A- 429 070

## Description

The present invention relates to a piston for alternating type volumetric engines and, in particular, an internal combustion engine piston with skirt comprising seats on bosses to support the gudgeon pin linking with the small end of the connecting rod.

In internal combustion engines, as in other volumetric engines, the force due to the fluid expanding inside the cylinder is transferred to the crankshaft by the piston.

The seal between the piston and the cylinder in which it moves is ensured by one or more piston rings, lodged in circumferential grooves on the external surface of the skirt in the upper part of the piston. The piston is connected to the connecting rod by a transverse pin which is generally floating i.e. not bonded to the piston or connecting rod, in a suitable seat below the grooves.

The pin is held in position by a pair of elastic snap rings, one at each end, such as Seeger type safety lock rings lodged in circumferential grooves in the pin bore, or is locked by plugs forced into the ends of the pin itself.

Similar systems of retaining the pin, although widely used, are the source of drawbacks, especially in high-performance engines; e.g. the thermal and mechanical stresses tend to alter the characteristics of the retention devices and cause them to leave their respective seats with consequent irreparable damage to the piston and cylinder.

In recently constructed engines and in particular in high-performance competition engines, the tendency is to use light pistons in which there is a reduction in both the total surface area and the height of the skirt in parts of the piston not subject to stresses between the piston and cylinder i.e. in correspondence of the gudgeon pin bosses.

One of the main drawbacks of the presently known pistons is that the piston in its movement inside the cylinder oscillates about the gudgeon pin axis because the centre of mass of the piston is not in line with that axis. This leads inevitably to some of the power being absorbed in vibration and friction and/or frictional wear on the reciprocating parts.

The oscillating movement and the consequent vibration increases as the distance between the centre of mass of the piston and the axis of the gudgeon pin increases. It is possible to produce a piston where the centre of mass is in line with the axis of the gudgeon pin, but this increases the weight of the piston and reduces the performance of the engine.

GB-A-429070 discloses a piston according to the preamble of claim 1, i. e. a piston in which at least a part of the gudgeon pin seat is located at a distance from the upper edge of the piston that is less than the distance of at least one of the grooves from the upper edge of the piston, and in such a position that the projection of the seat onto the skirt of the piston intersects at least one of the grooves. The gudgeon pin is held in position by a common circlip at one end and by the blind end of the socket at the other end.

It is therefore necessary at the design stage to decide on a compromise between competing requirements viz. reducing the distance from the centre of mass of the piston to the axis of the gudgeon pin or lightening the piston. In pistons known at present some distance between the centre of mass of the piston and the axis of the gudgeon pin is accepted, the lower limit of this distance being determined by the position of the gudgeon pin seat or bore in relation to the piston ring grooves.

One object of the present invention is to overcome the drawbacks of the known technique and produce a light piston in which the distance between the centre of mass of the piston and the axis of the piston is less than the limits imposed on presently known pistons.

Another object of the present invention is to provide a piston with more reliable means of retaining the gudgeon pin than that known at present.

These objects are achieved by a piston according to claim 1.

Thus, the distance between the centre of mass of the piston and the axis of the gudgeon pin can be considerably reduced without adding further to the weight of the piston.

According to an advantageous aspect of the present invention, the piston comprises at least one bored access hole corresponding to the projection of said seat onto the skirt of the piston. A plug inserted into this bore maintains the continuity of the skirt and the grooves intersected on the piston.

This arrangement allows the gudgeon pin to be retained by the plugs in its correct position without the use of the known means for retaining the pin in position.

Furthermore, for a given piston shape, the overall area of contact between the piston and the cylinder is advantageously increased with consequent improvement in heat exchange between said two surfaces. The skirt, while being very short in the axial direction, extends for almost all of the circumference, forming an increased area of contact with the cylinder.

These and other advantages will become evident from the following description, which is given for illustrative and not limitative purposes and refers to the attached drawings, in which:
- Fig. 1 is a front view of the piston according to the invention;
- Fig. 2 is a plan view of the underside of a possible embodiment of the piston according to the invention;
- Fig. 3 is a plan view of the underside of another embodiment of the piston according to the invention;
- Fig. 4 is a front view of the piston shown in Fig. 3;
- Fig. 5 is a section along the plane V - V of the piston shown in Fig.4;
- Fig. 6 is a section along the plane VI - VI (Fig. 5) of the piston shown in Fig.4;
- Figs. 7 and 8 show partially sectioned views of other embodiments of the piston according to the invention.

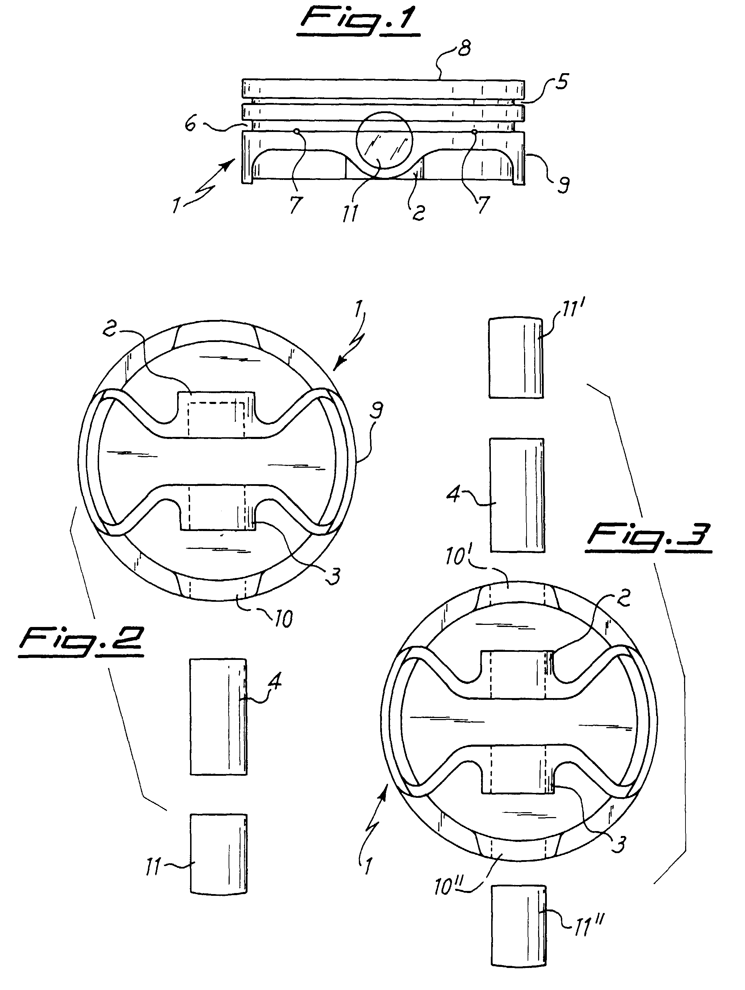

With reference firstly to figs. 1 and 2, a piston 1 is shown comprising a cylindrical body with a pair of bosses 2,3 which constitute a seat for the gudgeon pin 4 linking the piston with the small end of the connecting rod.

Grooves 5, 6 are recessed into the skirt 9 of the piston 1 and in said grooves fit the respective piston rings (not shown), e.g. a compression ring in groove 5 and an oil-control ring in groove 6. In the latter, there is also provision for a series of small holes 7 to allow oil to pass into the interior of the piston and return to the sump.

According to an advantageous aspect of the invention, at least part of the seat which receives the gudgeon pin 4 is located closer to the upper edge 8 of the piston 1 than at least one of the grooves e.g. groove 6. In particular, the seat for the gudgeon pin 4 is located so that the projection of the seat on the skirt 9 of the piston 1 intersects the groove 6.

A reduction of the compression moment, i.e. the distance from the top edge 8 of the piston 1 to the axis of the gudgeon pin4, involves a corresponding reduction of the distance from the centre of mass of the piston 1 to the axis of the gudgeon pin 4. The reduction of the compression moment allows to reduce the oscillatory movement of the piston, thus reducing not only the power consumption through the induced vibration but also the wear and tear on the piston and cylinder due to friction. Besides the advantage of an increased piston reliability, reducing the compression moment is achieved without adding to the weight of the piston, i.e. without sacrificing performance for reliability.

In the embodiment illustrated in figs. 1 and 2 an access hole 10 is provided in the skirt 9 to allow for the insertion of the gudgeon pin 4 into the seat formed by the two bosses 2, 3. The gudgeon pin 4 is held in position in its seat by a plug 11, preferably cylindrical, which is inserted into the hole 10 until it bears against an extremity of the gudgeon pin 4.

In the assembled position the plug 11 is supported in a floating condition by the seat 3 at one end and, at its opposite end, by the skirt 9 in which the access hole 10 is bored. In particular, the outer surface of the plug 11 which faces the skirt 9 becomes part of the skirt itself and comprises a recessed groove portion corresponding to groove 6 on the skirt 9. The installation of a piston ring (not illustrated) in groove 6 allows to retain the gudgeon pin 4 and the plug 11 in position, preventing the latter from being rotated.

Other means can be foreseen for preventing the plug 11 from being rotated by the gudgeon pin 4, e.g. small removable pins (not shown) can be inserted into and extracted from the bed of the piston ring groove.

Figs. 3 to 6 show a piston 1 which, according to another embodiment of the invention, comprises two holes 10' and 10'' in diametrically opposite positions with respect to the seat of the gudgeon pin 4, with two plugs 11' and 11'' which retain the gudgeon pin 4 in position in the seat formed within the bosses 2 and 3.

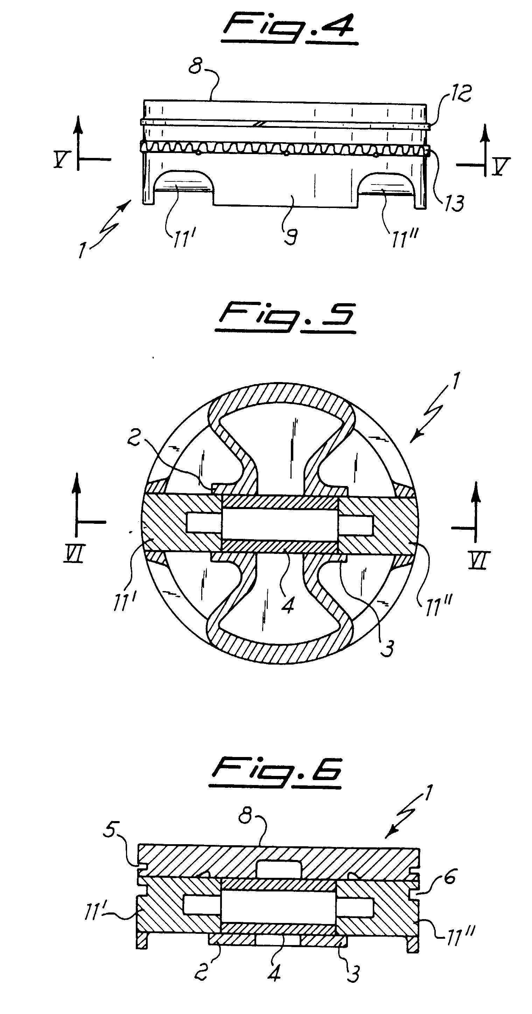

With particular reference to Fig. 4, a piston 1 is shown in assembled condition i.e. with a compression ring 12 in its groove 5 and a oil-control ring 13 in its groove 6.

In this case too the plugs 11' and 11" are supported in a floating condition by the bosses 2 and 3, and by the ends of skirt 9 in which the respective access holes 10' and 10" are bored. The outer surfaces of the plugs 11' and 11" which face the skirt 9 become part of the skirt itself and comprise recessed groove portions corresponding to groove 6 on the skirt 9.

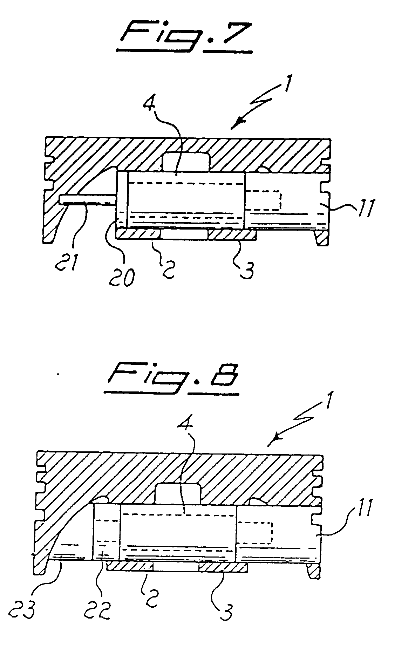

Other embodiments of a piston according to the invention are shown in Figs.7 to 9.

Fig. 7 shows a piston 1 with only one plug 11 to close the sole access hole 10 to the seat for the gudgeon pin 4. On the opposite side to the plug 11, a supporting element 20 is lodged in boss 2 and is fitted with a spigot 21 which locates it in a centering hole provided in the body of piston 1.

Fig. 8 shows a three ring piston 1 in which, opposite to plug 11, there is a spacer 22 partially housed in boss 2, which bears against a shoulder 23 of the body of the piston 1 to maintain the gudgeon pin 4 in position between the bosses 2 and 3.

## Claims

1. A piston (1) for reciprocating internal combustion engines, of the type comprising a load-bearing cylindrical body with at least two bosses (2, 3) forming a seat for a transverse gudgeon pin (4) adapted for connection to the small end of a connecting rod, as well as one or more grooves (5, 6) in the piston skirt (9) to receive one or more piston rings (12, 13), at least a part of the gudgeon pin seat being located at a distance from the upper edge (8) of the piston (1) that is less than the distance of at least one (6) of said grooves from the upper edge of the piston, and in such a position that the projection of said seat onto the skirt (9) of the piston (1) intersects at least one (6) of said grooves, characterised in that it comprises at least one bored access hole (10) corresponding to the projection of said seat onto the skirt (9) of the piston (1), and at least one plug (11) inserted into said at least one access hole (10), said plug (11) bearing against an extremity of the gudgeon pin (4) to retain said pin in position into its seat.

2. A piston according to Claim 1, characterised in that it comprises two of said access holes (10', 10") in diametrically opposed positions with respect to the seat of said gudgeon pin (4) and two of said plugs (11', 11") fitted in a floating manner in said access holes.

3. A piston according to Claim 1 or 2, characterised in that the outer surface of said plug or plugs (11; 11', 11") which faces the skirt (9) forms part of the surface of the skirt itself and comprising a recessed groove portion in correspondence with the groove or grooves (5, 6) on the skirt (9).

4. A piston according to Claim 2 or 3, characterised in that each of said plugs (11', 11") bears against one end of the gudgeon pin (4) within the supporting boss (2, 3) of the pin itself to hold the same in its correct position.

5. A piston according to any of the preceding Claims, characterised by having means (12, 13) for preventing said plugs (11; 11', 11") from being rotated by said gudgeon pin (4).

6. A piston according to any of the preceding claims, characterised by comprising means for holding said plugs (11; 11', 11") inserted into the respective access hole (10; 10', 10").

## Patentansprüche

1. Ein Kolben (1) für interne Verbrennungskolbenmotoren von der Art umfassend einen belastbaren zylindrischen Körper mit zumindest zwei Naben (2, 3), die ein Lager für einen querlaufenden Kolbenbolzen (4) bilden, der für die Anbringung an das kleine bzw. kurze Ende einer Pleuelstange angepaßt ist, sowohl als auch eine oder mehrere Rillen (5, 6) im Kolbenrand (9) um eine oder mehrere Kolbenringe (12, 13) aufzunehmen, wobei zumindest ein Teil des Kolbenbolzenlagers in einem Abstand von der oberen Kante (8) des Kolbens (1) lokalisiert ist, der geringer ist als der Abstand von zumindest einer (6) der Rillen von der oberen Kante des Kolbens und in einer solchen Position angebracht ist, daß sich die Projektion des Lagers auf dem Kolbenrand (9) des Kolbens (1) mit zumindest einer (6) der Rillen kreuzt, **dadurch gekennzeichnet,** daß der Kolben zumindest ein gebohrtes Zugangsloch (10) umfaßt, das der Projektion des Lagers auf dem Kolbenrand (9) des Kolbens (1) entspricht, und zumindest einen Zapfen (11) umfaßt, der in das zumindest eine Zugangsloch (10) eingeführt wird, wobei der Zapfen (11) gegen das äußerste Ende des Kolbenbolzens (4) drückt, um den Kolbenbolzen in seinem Lager in Position zu halten.

2. Ein Kolben nach Anspruch 1, **dadurch gekennzeichnet,** daß es zwei Zugangslöcher (10', 10") in genau entgegengesetzten Positionen bezüglich des Lagers des Kolbenbolzens (4) umfaßt und zwei Zapfen (11', 11") in beweglicher Weise in die Zugangslöcher eingepaßt werden.

3. Ein Kolben nach den Ansprüchen 1 oder 2, **dadurch gekennzeichnet,** daß die äußere Oberfläche des Zapfens oder der Zapfen (11; 11', 11"), die in Richtung des Kolbenrandes (9) weisen, selbst einen Teil der Oberfläche des Kolbenrandes bilden und ein ausgespartes Rillenteil in Übereinstimmung mit der Rille oder den Rillen (5, 6) des Kolbenrandes (9) umfaßt.

4. Ein Kolben nach Anspruch 2 oder 3, **dadurch gekennzeichnet,** daß jeder der Zapfen (11', 11") gegen ein Ende des Kolbenbolzens (4) innerhalb der unterstützenden Nabe (2, 3) des Kolbenbolzens selbst drückt, um denselben in seiner korrekten Position zu halten.

5. Ein Kolben nach einem der vorherigen Ansprüche, **gekennzeichnet durch** Mittel (12, 13), die verhindern, daß die Zapfen (11; 11', 11") von dem Kolbenbolzen (4) gedreht werden.

6. Ein Kolben nach einem der vorherigen Ansprüche, **dadurch gekennzeichnet,** daß Haltemittel für die Zapfen (11; 11', 11") umfaßt werden, die in das entsprechende Zugangsloch (10; 10', 10") eingeführt werden.

## Revendications

1. Piston (1) pour des moteurs à combustion interne à pistons alternatifs du type comprenant un corps cylindrique portant une charge comprenant au moins deux bossages (2,3) formant un siège pour un axe de piston transversal (4) adapté pour être raccordé à la petite extrémité d'une bielle, ainsi qu'une ou plusieurs gorges (5,6) dans la jupe (9) du piston pour recevoir un ou plusieurs segments de piston (12,13), au moins une partie du siège de l'axe de piston étant située à une distance du bord supérieur (8) du piston (1), qui est inférieure à la distance entre au moins l'une (6) desdites gorges et le bord supérieur du piston, et dans une position telle que la partie saillante dudit siège sur la jupe (9) du piston (1) recoupe au moins l'une (6) desdites gorges, caractérisé en ce qu'il comprend au moins un trou d'accès percé (10) correspondant à la partie saillante dudit siège sur la jupe (9) du piston (1), et au moins un bouchon (11) inséré dans ledit au moins un trou d'accès (10), ledit bouchon (11) s'appuyant contre une extrémité de l'axe de piston (1) pour retenir ledit axe en position dans son siège.

2. Piston selon la revendication 1, caractérisé en ce qu'il comprend deux desdits trous d'accès (10',10") dans des positions diamétralement opposées par rapport au siège dudit axe de piston (4), et deux desdits bouchons (11',11") montés d'une manière flottante dans lesdits trous d'accès.

3. Piston selon la revendication 1 ou 2, caractérisé en ce que la surface extérieure du ou desdits bouchons (11;11',11"), qui est tournée vers la jupe (9), fait partie de la surface de la jupe elle-même et comporte une partie de gorge en renfoncement d'une manière correspondant à la ou aux gorges (5,6) formées dans la jupe (9).

4. Piston selon la revendication 2 ou 3, caractérisé en ce que chacun desdits bouchons (11',11") prend appui contre une extrémité de l'axe de piston (4) à l'intérieur du bossage de support (2,3) de support de l'axe lui-même pour retenir ce dernier dans sa position correcte.

5. Piston selon l'une quelconque des revendications précédentes, caractérisé en ce qu'il comporte des moyens (12,13) pour empêcher que l'axe de piston (4) fasse tourner lesdits bouchons (11;11',11").

6. Piston selon l'une quelconque des revendications précédentes, caractérisé en ce qu'il comporte des moyens pour retenir lesdits bouchons (11;11',11") à l'état inséré dans le trou respectif d'accès (10;10',10").
